# EUROPÄISCHE PATENTSCHRIFT

(11) **EP 2 866 622 B1**
(45) Veröffentlichungstag und Bekanntmachung des Hinweises auf die Patenterteilung: **02.12.2020**
(21) Anmeldenummer: 13734024.6
(22) Anmeldetag: 28.06.2013
(51) Int. Cl.: A47J 31/44

(54) **SYSTEM UND VERFAHREN ZUM ZUBEREITEN EINES GETRÄNKS**
SYSTEM AND METHOD FOR PREPARING A BEVERAGE
SYSTÈME ET PROCÉDÉ POUR PRÉPARER UNE BOISSON

(30) Priorität: 29.06.2012 DE 102012105787
(43) Veröffentlichungstag der Anmeldung: 06.05.2015
(73) Patentinhaber: Eugster/Frismag AG, 8580 Amriswil (CH)
(72) Erfinder: KRÜGER, Marc, 51467 Bergisch Gladbach (DE); EMPL, Günter, 51429 Bergisch Gladbach (DE)
(74) Vertreter: Loock, Jan Pieter
(86) Internationale Anmeldenummer: PCT/EP2013/063656
(87) Internationale Veröffentlichungsnummer: WO 2014/001516

(56) Entgegenhaltungen:
- WO-A1-02/078498
- WO-A1-2006/032564
- WO-A1-2012/010317
- WO-A2-2012/000878
- DE-U1-202010 006 556

## Beschreibung

### Stand der Technik

Die vorliegende Erfindung betrifft ein System zum Zubereiten eines Getränks aufweisend eine Portionskapsel, welche ein Getränkerohmaterial beinhaltet, und eine Brühvorrichtung, welche eine Brühkammer zur Aufnahme der Portionskapsel und zur Extraktion des Getränks aus der Portionskapsel mittels Heißwasser umfasst.

Eine solches System ist beispielsweise aus der Druckschrift WO 2012/010317 A1 bekannt. Das System umfasst eine Portionskapsel und eine Brühvorrichtung mit einer Brühkammer zum Extrahieren und/oder Lösen einer in der Portionskapsel vorgesehenen Substanz, wobei die Brühkammer ein erstes Brühkammerelement und ein zweites Brühkammerelement aufweist und das erste Brühkammerelement zwischen einer Ladestellung, in welcher das erste und das zweite Brühkammerelement voneinander beabstandet sind, und einer Extraktionsstellung, in welcher das erste und das zweite Brühkammerelement zur Bildung einer im Wesentlichen geschlossenen Brühkammer einander angenähert sind, bewegbar ist und jedes Brühkammerelement jeweils ein Perforationsmittel aufweist, wobei mit dem ersten Perforationsmittel der Kapseldeckel und mit dem zweiten Perforationsmittel der Bodenbereich der Portionskapsel anstechbar ist. Die Portionskapsel ist dabei eigens auf die Brühvorrichtung abgestimmt, um stets einen störungsfreien und zuverlässigen Brühvorgang, sowie eine hohe Qualität des herzustellenden Getränks sicherzustellen.

Ein weiteres System zur Zubereitung eines Getränks ist aus der Druckschrift WO 2006 / 032 564 A1 bekannt, bei welchem ein Kaffeepad durch einen Einwurfschacht mit seitlichen Führungsnuten zur Führung eines umlaufenden Flansches des Kaffeepads in eine Brühkammer eingeführt wird.

Die Beliebtheit solcher Portionskapselbrühsysteme ist in den vergangenen Jahren stetig gewachsen, so dass mittlerweile eine Vielzahl von unterschiedlichen Portionskapselsystemen am Markt zu finden sind. Die Portionskapsel und die Brühkammermaschinen der jeweiligen Systeme unterscheiden sich äußerlich häufig nur geringfügig voneinander, obwohl der innere Aufbau und die jeweiligen Eigenschaften der Portionskapseln teilweise stark voneinander abweichen. Nachteiligerweise besteht somit für den Verbraucher die Gefahr, dass er versehentlich Portionskapseln des einen Portionskapselsystems in einer Brühvorrichtung eines anderen Portionskapselsystems zum Herstellen eines Getränks verwendet möchte, wodurch erhebliche Beschädigungen der Brühvorrichtung auftreten können. Denkbar ist beispielsweise, dass sich die Perforationsmittel einer Brüheinheit, die normalerweise lediglich zum Durchstoßen einer dünnen Verschlussfolie der passenden Portionskapsel vorgesehen sind, verbiegen oder sogar abbrechen, wenn Sie mit einer systemfremden Portionskapsel betrieben werden, die unmittelbar unterhalb der Verschlussfolie ein starres und stabiles Verteil- oder Filterelement aufweist.

### Offenbarung der Erfindung

Es war deshalb die Aufgabe der vorliegenden Erfindung, ein System zum Zubereiten eines Getränks unter Verwendung von Portionskapseln zur Verfügung zu stellen, bei welchem der Betrieb der Brühvorrichtung mit systemfremden Portionskapseln unterbunden wird.

Gelöst wird die Aufgabe mit einem System gemäss Anspruch 1.

Das erfindungsgemäße System ermöglicht in vorteilhafter Weise eine Prüfung der Portionskapsel vor der Inbetriebnahme der Brühvorrichtung dahingehend, ob es sich bei der betreffenden Portionskapsel um eine zugelassene und bekannte, d.h. systemeigene Portionskapsel handelt, von welcher keine Gefahr für die Brühvorrichtung ausgeht. Denkbar ist beispielsweise, dass sich die Brühkammer nicht schließen lässt oder dass die Portionskapsel durch die Brühkammer einfach durchfällt oder dass sich der Brühvorgang nicht starten lässt, wenn die Portionskapsel nicht anhand ihrer Kennung eindeutig identifiziert werden kann. Auf diese Weise wird unterbunden, dass die Brühvorrichtung mit einer systemfremden Portionskapsel, welche keine verifizierbare Kennung aufweist, betrieben wird. Die Gefahr einer Beschädigung der Brühvorrichtung aufgrund der Inbetriebnahme der Brühvorrichtung mit solchen systemfremden Portionskapseln wird vorteilhafterweise vollständig ausgeräumt, ohne dass hierfür eine erhöhte Aufmerksamkeit des Verbrauchers erforderlich wäre.

Vorteilhafte Ausgestaltungen und Weiterbildungen der Erfindung sind den Unteransprüchen, sowie der Beschreibung unter Bezugnahme auf die Zeichnungen entnehmbar.

Vorzugsweise umfasst der Kennungsdetektor eine Widerstandsmesseinrichtung zur Bestimmung eines elektrischen Widerstandes der Portionskapsel oder eines Teilbereichs der Portionskapsel.

Gemäß einer bevorzugten Ausführungsform der vorliegenden Erfindung ist vorgesehen, dass die Widerstandsmesseinrichtung einen ersten Kontaktpunkt zur Kontaktierung der Portionskapsel und einen zweiten Kontaktpunkt zur Kontaktierung der Portionskapsel umfasst, wobei die Widerstandsmesseinrichtung eine Messvorrichtung zur Messung des elektrischen Widerstands zwischen dem ersten und dem zweiten Kontaktpunkt aufweist. Vorzugsweise wird mittels der beiden Kontaktpunkte die Leitfähigkeit eines Materials der Portionskapsel zwischen den beiden Kontaktpunkten gemessen. Denkbar ist dabei, dass ein Streifen eines elektrisch leitfähigen Materials auf der Außenfläche der Portionskapsel angeordnet ist, dessen Leitfähigkeit vermessen wird, oder dass die Leitfähigkeit des Materials der Kapselwandung selbst vermessen wird. In diesem Fall ist die Kapselwandung selbst beispielsweise aus einem leitfähigen Kunststoff gefertigt. Ferner ist denkbar, dass die Leitfähigkeit einer Deckelverschlussfolie für die Portionskapsel, welche beispielsweise aus Aluminium gefertigt sein kann, vermessen wird. Das Material ist jedenfalls derart ausgebildet, dass dessen Leitfähigkeit von der Leitfähigkeit typischer Portionskapseln anderer Portionskapselsysteme deutlich abweicht, so dass anhand der gemessenen Leitfähigkeit eine zuverlässige Unterscheidung dahingehend möglich ist, ob es sich bei der vermessenden Portionskapsel um eine systemfremde oder eine systemeigene Portionskapsel handelt.

Gemäß einer bevorzugten Ausführungsform der vorliegenden Erfindung ist vorgesehen, dass die Brühkammer ein Aufnahmeelement und ein Verschlusselement aufweist, wobei das Verschlusselement relativ zum Aufnahmeelement zwischen einer Ladestellung, in welcher das Verschlusselement und das Aufnahmeelement voneinander beabstandet sind, und einer Extraktionsstellung, in welcher das Aufnahmeelement und das Verschlusselement zur Bildung der im Wesentlichen geschlossenen Brühkammer einander angenähert sind. In vorteilhafter Weise kann somit die elektrische Leitfähigkeit eines beliebigen Portionskapselabschnitts gemessen werden. Erfindungsgemäss wird eine durch einen Einführschacht in die Brühvorrichtung eingeführte Portionskapsel mittels Halteelementen am Verschlusselement gehalten, wenn sich das Verschlusselement in der Ladestellung befindet, wobei der Kennungsdetektor in den Halteelementen angeordnet ist.

Gemäß einer bevorzugten Ausführungsform der vorliegenden Erfindung ist vorgesehen, dass eines der beiden Halteelemente den ersten Kontaktpunkt umfasst und das andere der beiden Halteelemente den zweiten Kontaktpunkt umfasst. In vorteilhafter Weise kann somit schon vor dem Schließen der Brühkammer geprüft werden, ob es sich bei der in der Zwischenstellung befindlichen Portionskapsel um eine systemeigene Portionskapsel handelt, da stets die Halteelemente zwingend einen Kontakt zur Portionskapsel herstellen, wenn eine neue Portionskapsel eingefüllt wird. Denkbar ist, dass sich das Verschlusselement beim Detektieren einer systemfremden Portionskapsel nicht in die Extraktionsstellung überführen lässt oder dass das Verschlusselement motorisch eine kurze Vorwärtsbewegung in Richtung des Aufnahmeelements gefolgt von einer Rückwärtsbewegung in die Ladestellung, insbesondere mittels eines Aktuators, durchführt, so dass die systemfremde Portionskapsel automatisch in den Abfallbehälter ausgeworfen wird.

Gemäß einer bevorzugten Ausführungsform der vorliegenden Erfindung ist vorgesehen, dass die Brühvorrichtung eine Pumpe zum Einleiten von Brühflüssigkeit unter Druck in die Brühkammer aufweist, wobei die Pumpe mittels eines Steuerkreises eingeschaltet wird und wobei der Steuerkreis einen Schalter aufweist, welcher ein Einschalten der Pumpe nur dann erlaubt, wenn der Kennungsdetektor eine bestimmte Kennung an der Portionskapsel detektiert. Denkbar ist, dass der Steuerkreis ein Steuerungselement umfasst, welches die Pumpe einschaltet, wenn die mittels der Widerstandsmesseinrichtung gemessene Leitfähigkeit an der Portionskapsel einen vordefinierten Wert umfasst.

Offenbart wird eine Ausführungsform, in der der Kennungsdetektor eine Induktionsmesseinrichtung zur Messung eines durch die Portionskapsel induzierten elektromagnetischen Feldes umfasst. Denkbar ist beispielsweise, dass die Portionskapsel ein magnetisches Material umfasst, welches bei einer Bewegung der Portionskapsel ein elektromagnetisches Feld induziert.

Offenbart wird eine Ausführungsform, in der der Kennungsdetektor einen Magnetschalter umfasst, welcher durch einen an oder in der Portionskapsel angeordneten Magneten, dessen Magnetfeld als Kennung fungiert, zu betätigen ist. Der Magnetschalter fungiert insbesondere als einfacher Schalter im Steuerkreis zur Einschaltung der Pumpe, so dass eine besonders kostengünstige Implementierung möglich ist. Ein weiterer Gegenstand der vorliegenden Erfindung ist ein Verfahren zum Zubereiten eines Getränkes mittels des erfindungsgemäßen Systems, wobei in einem ersten Schritt die Portionskapsel in die Brühvorrichtung eingeführt wird, wobei in einem zweiten Schritt die Kennung der Portionskapsel mittels des Kennungsdetektors identifiziert wird und wobei in einem dritten Schritt die Portionskapsel in die Brühkammer überführt wird und/oder der Extraktionsvorgang gestartet wird, wenn die Kennung der Portionskapsel identifiziert wurde. In vorteilhafter Weise wird bei dem erfindungsgemäßen Verfahren sichergestellt, dass die Portionskapsel nur dann in der geschlossenen Brühkammer angeordnet wird, wenn es sich um eine systemeigene Portionskapsel handelt. Andernfalls wird das Schließen der Brühkammer verhindert und/oder die Portionskapsel wird nicht aufgenommen und fällt in einen unterhalb der Brühkammer befindlichen Abfallbehälter, um einer etwaigen Beschädigung der Brühvorrichtung durch Aufnahme einer systemfremden Portionskapsel vorzubeugen. Alternativ ist denkbar, dass der Extraktionsvorgang und insbesondere die Pumpe zum Einleiten der Brühflüssigkeit nur dann gestartet werden, wenn das Vorhandensein einer systemeigenen Portionskapsel im zweiten Schritt detektiert wird. Auch hierdurch wird einer etwaigen Beschädigung der Brühvorrichtung durch die Extraktion einer systemfremden Portionskapsel vorgebeugt. Denkbar ist, dass im zweiten Schritt mittels einer Widerstandsmesseinrichtung eine Leitfähigkeit der Portionskapsel gemessen wird oder dass mittels einer Induktionsmesseinrichtung ein durch die Bewegung der Portionskapsel durch den Einführschacht induziertes elektromagnetisches Feld gemessen wird.

Vorzugsweise wird im zweiten Schritt die detektierte Kennung mit gespeicherten Referenzkennungen verglichen. Alternativ ist aber auch denkbar, dass der Steuerkreis zum Einschalten der Pumpe derart ausgebildet ist, dass das Einschalten der Pumpe nur dann erfolgt, wenn zwischen dem ersten und dem zweiten Kontaktpunkt der Widerstandsmesseinrichtung ein ohmscher Widerstands (über die Portionskapsel) gemessen wird, welcher in einem vordefinierten Bereich liegt.

### Kurze Beschreibung der Figuren

Figuren 1a bis 1e zeigen schematische Schnittbildansichten eines nicht erfindungsgemässen Systems und Verfahrens zur Herstellung eines Getränks
Figur 2 zeigt eine schematische Schnittbild eines nicht erfindungsgemässen Systems zur Herstellung eines Getränks

### Ausführungsformen

In den verschiedenen Figuren sind gleiche Teile stets mit den gleichen Bezugszeichen versehen und werden daher in der Regel auch jeweils nur einmal benannt bzw. erwähnt.

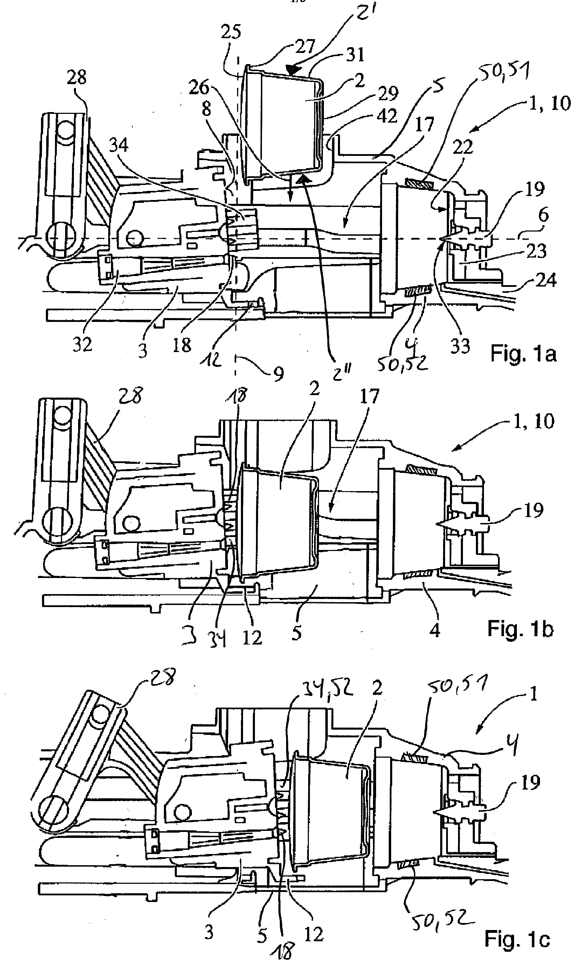

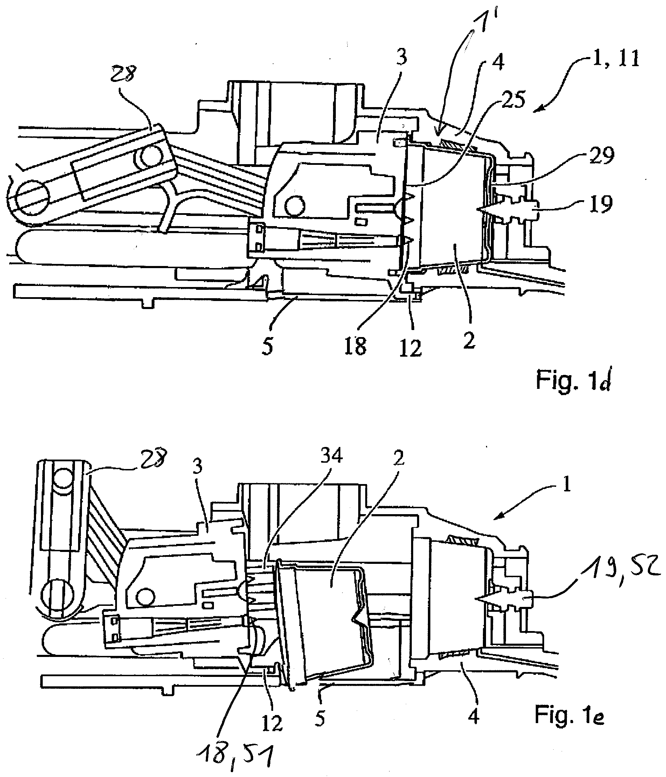

In **Figuren 1a bis 1e** sind schematische Schnittbildansichten eines Systems 1 und eines Verfahrens zur Herstellung eines Getränks gemäß einer ersten Ausführungsform dargestellt. Das System 1 umfasst eine Brühvorrichtung 5 und eine Portionskapsel 2. Die Brühvorrichtung 1 umfasst dabei ein als Glockenelement ausgebildetes Aufnahmeelement 4 und ein Verschlusselement 3. Das Verschlusselement 3 ist relativ zum Aufnahmeelement 4 entlang einer axialen Richtung 6 zwischen einer in Figuren 1a und 1b illustrierten Ladestellung 10 und einer in Figur 1d illustrierten Extraktionsstellung 11 bewegbar.

Die Portionskapsel 2 umfasst einen aus Kunststoff gefertigten und topfförmig ausgebildeten Kegelstumpf 31. Der Kegelstumpf 31 wird mittels eines aus Kunststoff- oder Aluminiumfolie gefertigten Kapseldeckels 25 luftdicht verschlossen. Innerhalb der Portionskapsel 2 befindet sich eine Getränkesubstanz, insbesondere ein mittels einer Extrahierflüssigkeit extrahierbares Röstkaffeepulver. Optional weist die Portionskapsel 2 ein nicht abgebildetes Filterelement auf, welches zwischen dem Kapselboden 29 und der Getränkesubstanz angeordnet ist. Der Kapseldeckel 25 ist im Bereich eines Kapselflansches 27 mit dem Kegelstumpf 31 verklebt oder verschweißt. Der Kegelstumpf 31 ist aus einem elektrisch leitfähigen Kunststoff hergestellt, insbesondere tiefgezogen, welcher eine wohldefinierte elektrische Leitfähigkeit als Kennung zur Identifizierung der Portionskapsel 2 aufweist.

Das Verschlusselement 3 weist auf einer dem Aufnahmeelement 4 zugewandten Endfläche 8 eine Mehrzahl von ersten Perforationsmitteln 18 auf. Die ersten Perforationsmittel 18 umfassen jeweils eine Perforationsspitze, welche in Richtung des Aufnahmeelements 4 von der Endfläche 8 abstehen. Ferner sind in der Endfläche 8 Wasseraustrittsöffnungen ausgebildet (aus perspektivischen Gründen in den Figuren 1a bis 1e nicht zu erkennen). Das Verschlusselement 3 weist ferner einen Wasserzuführkanal 32 auf, welcher zur Zuleitung von Extraktionsflüssigkeit an die Wasseraustrittsöffnungen vorgesehen ist. Das Verschlusselement 3 weist zwei seitliche Halteärmchen 34 auf, deren freien Enden einander zugewandt sind und den Kapselflansch 27 seitlich umfassen. Das Aufnahmeelement 4 weist ein zweites Perforationsmittel 19 auf, welches eine in Richtung des Verschlusselements 4 weisende Aufstechspitze umfasst, die innerhalb des Hohlraums angeordnet ist. Die Aufstechspitze ist mit seitlichen Nuten 33 versehen, welche sich parallel zur axialen Richtung 6 erstrecken. Im Bereich der Aufstechspitze weist das Aufnahmeelement 4 eine Vertiefung 23 im Bodenbereich 22 des Hohlraums auf, in welche ein Ablaufkanal 24 mündet.

In **Figur 1a** ist das Verschlusselement 3 in der Ladestellung 10 illustriert, d.h. das Verschlusselement 3 ist entlang der axialen Richtung 6 von dem Aufnahmeelement 4 beabstandet. In dieser Ausgangsposition wird nun entlang einer Laderichtung 26 die Portionskapsel 2 durch einen nicht abgebildeten Benutzer in einen Einführschacht 42 eingeführt, so dass die Portionskapsel 2 unter Schwerkrafteinwirkung in einen Zwischenbereich zwischen das Verschlusselement 3 und das Aufnahmeelement 4 fällt.

In **Figur 1b** ist illustriert, dass die Portionskapsel 2 im Zwischenbereich auf einen Kapselanschlag 12 stößt und dort aufliegt. Gleichzeitig wird durch die seitlichen Halteärmchen 35 ein Kippen der Portionskapsel 2 in Richtung des Aufnahmeelements 4 verhindert, indem der Kapselflansch 27 in Richtung des Aufnahmeelements 4 an den Halteärmchen 34 abgestützt wird, so dass die Portionskapsel 2 im Wesentlichen axial entlang der axialen Richtung 6 ausgerichtet ist.

Im nächsten Schritt, illustriert anhand der **Figur 1c** wird das Verschlusselement 3 über ein Kniehebelgelenk 28 zu einer linearen Verschiebung entlang der axialen Richtung 6 in Richtung des Aufnahmeelements 4 angetrieben. Durch die Bewegung des Verschlusselements 3 in Richtung des Aufnahmeelements 4 wird die Portionskapsel 2 in den Hohlraum des Aufnahmeelements 21 eingeführt.

In **Figur 1d** ist das Verschlusselement 3 bis zum Aufnahmeelement 4 entlang der axialen Richtung 6 in die Extraktionsstellung 11 verschoben, so dass die Portionskapsel 2 nahezu vollständig in den Hohlraum des hohlen Glockenelement 21 eingeführt ist. Der Kapseldeckel 25 ist dabei durch die als Perforationsspitzen ausgebildeten ersten Perforationsmittel 18 perforiert worden, während der Kapselboden 29 durch das als Aufstechdorn ausgebildete zweite Perforationsmittel 19 perforiert worden ist. Das erste und das zweite Verschlusselement 3, 4 bilden nun eine hermetisch geschlossene Brühkammer 1', in welcher die Portionskapsel 2 angeordnet ist. Der Kapselflansch 27 ist dabei zwischen dem ersten und dem zweiten Verschlusselement 3, 4 insbesondere mittels eines elastischen Dichtrings 36 fest eingeklemmt. Der Kapselanschlag 12 ist dabei unterhalb des Aufnahmeelements 4 angeordnet.

Die Brühvorrichtung 5 weist einen Kennungsdetektor 50 in Form einer Widerstandsmesseinrichtung auf. Die Widerstandsmesseinrichtung umfasst einen ersten Kontaktpunkt 51 und einen zweiten Kontaktpunkt 52, welche jeweils aus einem elektrisch leitfähigen Material gebildet sind, welches in die Innenwandung des Aufnahmeelements 4 bündig eingelassen ist. Die Widerstandsmesseinrichtung ist dazu ausgebildet, den ohmschen Widerstand zwischen dem ersten Kontaktpunkt 51 und dem zweiten Kontaktpunkt 52 zu messen. Wenn sich die Brühkammer 1' schließt und eine Portionskapsel 2 in der geschlossenen Brühkammer 1' angeordnet ist, gelangt der erste Kontaktpunkt 51 in Kontakt mit einem ersten Außenbereich 2' der Portionskapsel 2, während der zweite Kontaktpunkt 52 in Kontakt mit einem zweiten Kontaktbereich 2" der Portionskapsel 2 gelangt. Die Widerstandsmesseinrichtung misst somit die elektrische Leitfähigkeit der Portionskapsel 2 in einem Bereich zwischen dem ersten und dem zweiten Außenbereich 2', 2". Anhand der gemessenen elektrischen Leitfähigkeit wird entschieden, ob es sich bei der in der Brühkammer 1' befindlichen Portionskapsel 2 um eine systemeigene Portionskapsel 2 oder eine systemfremde Portionskapsel 2 handelt. Wenn der gemessene ohmsche Widerstand beispielsweise innerhalb eines vordefinierten Bereichs liegt bzw. einen vordefinierten Schwellwert übersteig oder unterschreitet wird angenommen, dass es sich um eine systemeigene Portionskapsel 2 handelt, welche bedenkenlos mittels der Brühvorrichtung 1 extrahiert werden kann. Es wird sodann ein Steuerkreis geschlossen, welche ein Einschalten einer Pumpe (nicht abgebildet) zum Fördern von Extraktionsflüssigkeit erlaubt, wodurch der Brühkammer 1' die Extraktionsflüssigkeit in Form von druckbeaufschlagtem und erhitztem Wasser zugeführt wird.

Die Extraktionsflüssigkeit wird dabei mittels der Pumpe durch den Wasserzuführkanal 32 zu den Wasseraustrittsöffnungen gefördert und gelangt von dort durch die mittels der ersten Perforationsmittel 18 erzeugten Perforationsöffnungen im Kapseldeckel 25 in die Portionskapsel 2. Die Getränkesubstanz wird von der Extraktionsflüssigkeit durchströmt, so dass sich ein Getränkeextrakt bildet, welcher die Portionskapsel 2 durch das mittels des Aufstechdorns im Kapselboden 29 erzeugte Perforationsloch wieder verlässt und anschließend in den Ablaufkanal 24 gelangt. Mittels des Ablaufkanals 24 wird der Getränkeextrakt vorzugsweise direkt einem nicht abgebildeten Trinkgefäß, wie beispielsweise einer Kaffeetasse, zugeführt. Nach dem Extraktionsvorgang wird das Verschlusselement 3, wie in **Figur 1e** illustriert, von der Extraktionsstellung 11 wieder zurück in Richtung der Ladestellung 10 bewegt. Die extrahierte Portionskapsel 2 wird dabei mittels der Halteärmchen 34 wieder aus dem Hohlraum des Aufnahmeelements 4 herausgezogen und in Richtung der Ladestellung 10 transportiert. Durch das Zurückfahren des Verschlusselements 3 stößt der Kapselflansch 27 an eine dem Aufnahmeelement 4 zugewandte Anschlagsfläche eines Kapselauswerfers. Die verbrauchte Portionskapsel 2 fällt hierdurch unter Schwerkrafteinwirkung in einen unterhalb des Zwischenbereichs angeordneten Auffangbehälter (nicht gezeigt). Anschließend befindet sich das Verschlusselement 3 wieder in der Ladeposition 10, so dass eine erneute Befüllung der Brühvorrichtung 1 mit einer unverbrauchten Portionskapsel 2 gemäß Figur 1a möglich ist.

Wenn die gemessene Leitfähigkeit außerhalb des vordefinierten Bereichs liegt, bleibt der Steuerkreis unterbrochen, so dass die Pumpe nicht eingeschaltet werden kann und eine Extraktion der systemfremden Portionskapsel verhindert wird. Denkbar ist, dass ein entsprechendes visuelles oder akustisches Fehlersignal generiert wird, welches dem Benutzer des Systems die Inkompatibilität der verwendeten Portionskapsel 2 signalisiert. Alternativ wäre auch denkbar, dass die Brühkammer 1' durch ein automatisches Zurückfahren des Verschlusselements 3 geöffnet wird und die systemfremde Portionskapsel 2 hierdurch automatisch in den Auffangbehälter ausgeworfen wird.

In einer erfindungsgemässen alternativen Ausführungsform wäre auch denkbar, dass die Widerstandsmesseinrichtung in die Halteärmchen 34 integriert wird, so dass noch vor dem Schließen der Brühkammer 1' eine Prüfung, ob es sich bei der von den Halteärmchen 34 in der Zwischenposition gehaltene Positionskapsel 2 um eine systemfremde oder eine systemeigene Portionskapsel 2 handelt. Denkbar ist, dass ein Schließen der Brühkammer 1' aktiv verhindert wird und/oder dass die Portionskapsel 2 in den Auffangbehälter automatisch ausgeworfen wird, wenn eine systemfremde Portionskapsel 2 detektiert wird. In diesem erfindungsgemässen Ausführungsbeispiel fungiert vorzugsweise das eine Halteärmchen 34 als erster Kontaktpunkt 51, während das andere Halteärmchen 34 als zweiter Kontaktpunkt 52 fungiert. Die Leitfähigkeit wird in diesem Fall insbesondere am Kapselflansch 27 und/oder am Kapseldeckel 25 gemessen.

In einer alternativen Ausführungsform fungieren die ersten Perforationsmittel 18 und das zweite Perforationsmittel 19 als Teil des Kennungsdetektors 50, wobei die ersten Perforationsmittel 18 als erster Kontaktpunkt 51 und das zweite Perforationsmittel 19 als der zweite Kontaktpunkt 52 dienen. Der Kennungsdetektor 50 misst dann den über die Portionskapsel 2 abfallenden elektrischen Widerstand zwischen den ersten Perforationsmitteln 18 und dem zweiten Perforationsmittel 19. Denkbar ist aber auch, dass nur die ersten Perforationsmittel 18 oder nur das zweite Perforationsmittel 19 als erster Kontaktpunkt 51 fungieren, während die Haltemittel 34 oder ein Wandungsbereich der Brühkammer 1' als zweiter Kontaktpunkt 52 fungieren.

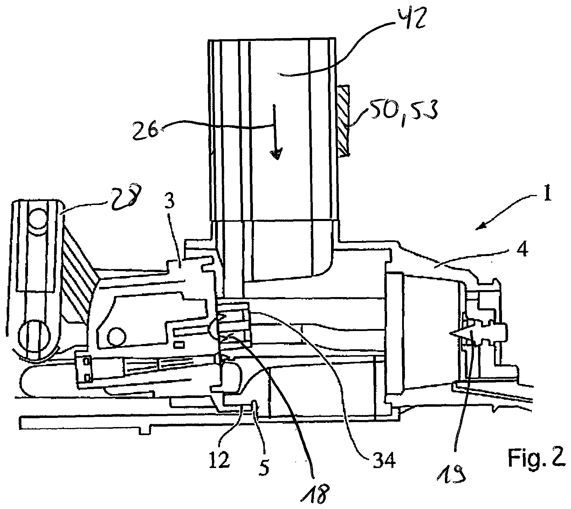

In **Figur 2** ist eine schematische Schnittbild eines Systems 1 zur Herstellung eines Getränks dargestellt, wobei das System 1 gemäß der zweiten Ausführungsform im Wesentlichen dem anhand der Figuren 1a bis 1e illustriertem System 1 gemäß der ersten Ausführungsform gleicht, wobei im Unterschied bei der zweiten Ausführungsform die Brühvorrichtung 5 einen Kennungsdetektor 50 in Form einer Induktionsmesseinrichtung 53 aufweist. Die Brühvorrichtung 5 weist einen verlängerten Einführschacht 42 auf, in dessen Wandung die Induktionsmesseinrichtung 53 angeordnet ist.

Die Portionskapsel 2, welche aus Gründen der Übersichtlichkeit nicht eingezeichnet wurde, weist eine Kennung in Form eines magnetischen Materials auf, welches vorzugsweise innerhalb der Portionskapsel 2 angeordnet oder in das Kapselmaterial, beispielsweise des Kegelstumpfes 31 oder des Kapseldeckels 25, integriert ist. Wenn die Portionskapsel 2 unter Schwerkrafteinwirkung durch den Einführschacht 42 fällt und sich somit an der Induktionsmesseinrichtung 53 vorbeibewegt, detektiert die Induktionsmesseinrichtung 53 ein spezifisches elektromagnetisches Feld, welches durch die Bewegung des magnetischen Materials induziert wird. Wenn die Eigenschaften des detektierten elektromagnetischen Feldes, insbesondere die Energieflussdichte oder dergleichen, innerhalb eines vordefinierten Bereichs oder oberhalb eines vorbestimmten Schwellwertes liegt, wird davon ausgegangen, dass gerade eine systemeigene Portionskapsel 2 in die Brühvorrichtung 2 eingelegt wird. Ein Schließen der Brühkammer 1' und ein Extrahieren der Portionskapsel 2 werden sodann gestattet. Wenn sich die Eigenschaften außerhalb der vordefinierten Werte befinden, wird davon ausgegangen, dass es sich bei der Portionskapsel 2 um eine systemfremde Portionskapsel 2 handelt. Denkbar ist, dass dann der Steuerkreis unterbrochen wird, so dass die Pumpe nicht eingeschaltet werden kann und eine Extraktion der systemfremden Portionskapsel 2 verhindert wird. Alternativ ist denkbar, dass ein entsprechendes visuelles oder akustisches Fehlersignal generiert wird, welches dem Benutzer des Systems 1 die Inkompatibilität der verwendeten Portionskapsel 2 signalisiert. Alternativ wäre auch möglich, dass die Portionskapsel 2 im Zwischenbereich nicht durch den Kapselanschlag 12 aufgefangen wird, sondern stattdessen direkt durch den Zwischenbereich hindurch in den Auffangbehälter fällt. Hierfür wird beispielsweise automatisch der Kapselanschlag 12 eingezogen oder das Verschlusselement 3 motorisch noch weiter vom Aufnahmeelement 4 beabstandet. Die Induktionsmesseinrichtung 53 umfasst insbesondere eine als Schleife ausgebildeten elektrischen Leiter, in welchem durch das zu vermessende elektromagnetische Feld ein Stromfluss induziert wird.

In einer alternativen Ausführungsform weist die Brühvorrichtung anstelle der in Figuren 1a bis 1e gezeigten Widerstandsmesseinrichtung oder anstelle der in Figur 2 gezeigten Induktionsmesseinrichtung 52 einen Magnetschalter auf, welcher durch einen in oder an der Portionskapsel 2 befindlichen Magneten betätigt wird. Denkbar ist, dass der Magnetschalter einen Steuerkreis derart betätigt, dass die Pumpe eingeschaltet werden kann, wenn eine systemeigene Portionskapsel mit einem ausreichend großen Magneten innerhalb der Brühkammer 1' angeordnet ist bzw. durch den Einführschacht 42 bewegt wird.

### BEZUGSZEICHENLISTE

- 1: System
- 1': Brühkammer
- 2: Portionskapsel
- 2', 2": Erster und zweiter Außenbereich
- 3: Verschlusselement
- 4: Aufnahmeelement
- 5: Brühvorrichtung
- 6: Axiale Richtung
- 8: Endfläche
- 10: Ladestellung
- 11: Extraktionsstellung
- 12: Kapselanschlag
- 18: Erstes Perforationsmittel
- 19: Zweites Perforationsmittel
- 22: Bodenbereich
- 23: Vertiefung
- 25: Kapseldeckel
- 26: Laderichtung
- 27: Kapselflansch
- 28: Kniehebelgelenk
- 29: Kapselboden
- 31: Kegelstumpf
- 32: Wasserzuführkanal
- 33: Nut
- 34: Halteärmchen
- 42: Einführschacht
- 50: Kennungsdetektor
- 51: Erster Kontaktpunkt
- 52: Zweiter Kontaktpunkt
- 53: Induktionsmesseinrichtung

## Patentansprüche

1. System (1) zum Zubereiten eines Getränks aufweisend eine Portionskapsel (2), welche ein Getränkerohmaterial beinhaltet, und eine Brühvorrichtung (5), welche eine Brühkammer zur Aufnahme der Portionskapsel (2) und zur Extraktion des Getränks aus der Portionskapsel (2) mittels Extraktionsflüssigkeit umfasst, wobei die Portionskapsel (2) eine Kennung aufweist und wobei die Brühvorrichtung (5) einen Kennungsdetektor (50) zum Identifizieren der Kennung der Portionskapsel (2) aufweist, **dadurch gekennzeichnet, dass** sine durch einen Einführschacht (42) in die Brühvorrichtung (5) eingeführte Portionskapsel (2) mittels Halteelementen (34) am Verschlusselement (3) gehalten wird, wenn sich das Verschlusselement (3) in der Ladestellung (10) befindet, wobei der Kennungsdetektor (50) in den Halteelementen (34) angeordnet ist, wobei das Verschlusselement (3) die Halteelemente (34) aufweist.

2. System (1) nach Anspruch 1, wobei die Brühvorrichtung (5) einen Einführschacht (42) zum Einführen einer Portionskapsel (2) in die Brühvorrichtung (5) aufweist.

3. System (1) nach einem der vorhergehenden Ansprüche, wobei die Brühkammer ein Aufnahmeelement (4) und ein Verschlusselement (3) aufweist, wobei das Verschlusselement (3) relativ zum Aufnahmeelement (4) zwischen einer Ladestellung (10), in welcher das Verschlusselement (3) und das Aufnahmeelement (4) voneinander beabstandet sind, und einer Extraktionsstellung (11), in welcher das Aufnahmeelement (4) und das Verschlusselement (3) zur Bildung der im Wesentlichen geschlossenen Brühkammer (1') einander angenähert sind.

4. System (1) nach einem der vorhergehenden Ansprüche, wobei die Brühvorrichtung (5) eine Pumpe zum Einleiten von Extraktionsflüssigkeit unter Druck in die Brühkammer aufweist, wobei die Pumpe mittels eines Steuerkreises eingeschaltet wird und wobei der Steuerkreis einen Schalter aufweist, welcher ein Einschalten der Pumpe nur dann erlaubt, wenn der Kennungsdetektor (50) eine bestimmte Kennung an der Portionskapsel (2) detektiert.

5. System (1) nach einem der vorhergehenden Ansprüche, wobei der Kennungsdetektor (50) eine Widerstandsmesseinrichtung zur Bestimmung eines elektrischen Widerstandes der Portionskapsel (2) oder eines Teilbereichs der Portionskapsel (2) umfasst.

6. System (1) nach Anspruch 5, wobei die Widerstandsmesseinrichtung einen ersten Kontaktpunkt (51) zur Kontaktierung der Portionskapsel (2) und einen zweiten Kontaktpunkt (52) zur Kontaktierung der Portionskapsel (2) umfasst, wobei die Widerstandsmesseinrichtung zur Messung des elektrischen Widerstands zwischen dem ersten und dem zweiten Kontaktpunkt (51, 52) konfiguriert ist.

7. System nach Anspruch 6, wobei eines der beiden Halteelemente (34) den ersten Kontaktpunkt (51) umfasst und das andere der beiden Halteelemente (34) den zweiten Kontaktpunkt (52) umfasst.

8. Verfahren zum Zubereiten eines Getränkes mittels eines Systems (1) nach einem der vorhergehenden Ansprüche, wobei in einem ersten Schritt die Portionskapsel (2) in die Brühvorrichtung (5) eingeführt wird, wobei in einem zweiten Schritt die Kennung der Portionskapsel (2) mittels des Kennungsdetektors (50) identifiziert wird und wobei in einem dritten Schritt die Portionskapsel (2) in die Brühkammer (1') überführt wird und/oder der Extraktionsvorgang gestartet wird, wenn die Kennung der Portionskapsel (2) identifiziert wurde.

9. Verfahren nach Anspruch 8, wobei im zweiten Schritt die detektierte Kennung mit gespeicherten Referenzkennungen verglichen wird.

10. Verfahren nach einem der Ansprüche 8 oder 9, wobei im zweiten Schritt mittels einer Widerstandsmesseinrichtung eine Leitfähigkeit der Portionskapsel (2) gemessen wird.

## Claims

1. System (1) for preparing a beverage, having a portion capsule (2) which contains a beverage raw material, and a brewing device (5) which comprises a brewing chamber for receiving the portion capsule (2) and for extracting the beverage from the portion capsule (2) by means of an extraction liquid, wherein the portion capsule (2) has an identification code and wherein the brewing device (5) has an identification code detector (50) for identifying the identification code of the portion capsule (2), **characterized in that** a portion capsule (2) which has been introduced into the brewing device (5) through an introduction chute (42) is held on the closure element (3) by means of holding elements (34) when the closure element (3) is situated in the loading position (10), wherein the identification code detector (50) is disposed in the holding elements (34), wherein the closure element (3) has the holding elements (34).

2. System (1) according to Claim 1, wherein the brewing device (5) has an introduction chute (42) for introducing a portion capsule (2) into the brewing device (5).

3. System (1) according to one of the preceding claims, wherein the brewing chamber has a receptacle element (4) and a closure element (3), wherein the closure element (3) relative to the receptacle element (4) between a loading position (10) in which the closure element (3) and the receptacle element (4) are mutually spaced apart, and an extraction position (11) in which the receptacle element (4) and the closure element (3) for forming the substantially closed brewing chamber (1') are mutually converged.

4. System (1) according to one of the preceding claims, wherein the brewing device (5) has a pump for directing pressurized extraction liquid into the brewing chamber, wherein the pump is switched on by means of a closed-loop control circuit and wherein the closed-loop control circuit has a switch which permits the pump to be switched on only when the identification code detector (50) detects a specific identification code on the portion capsule (2).

5. System (1) according to one of the preceding claims, wherein the identification code detector (50) comprises a resistance measuring installation for determining an electrical resistance of the portion capsule (2) or of a sub-region of the portion capsule (2).

6. System (1) according to Claim 5, wherein the resistance measuring installation comprises a first contact point (51) for contacting the portion capsule (2), and a second contact point (52) for contacting the portion capsule (2), wherein the resistance measuring installation is configured for measuring the electrical resistance between the first contact point (51) and the second contact point (52).

7. System according to Claim 6, wherein one of the two holding elements (34) comprises the first contact point (51), and the other of the two holding elements (34) comprises the second contact point (52) .

8. Method for preparing a beverage by means of a system (1) according to one of the preceding claims, wherein in a first step the portion capsule (2) is introduced into the brewing device (5), wherein in a second step the identification code of the portion capsule (2) is identified by means of the identification code detector (50), and wherein in a third step the portion capsule (2) is transferred into the brewing chamber (1') and/or the extraction procedure is started when the identification code of the portion capsule (2) has been identified.

9. Method according to Claim 8, wherein in the second step the detected identification code is compared with a stored reference identification code.

10. Method according to one of Claims 8 or 9, wherein in the second step a conductivity of the portion capsule (2) is measured by means of a resistance measuring installation.

## Revendications

1. Système (1) de préparation de boisson, présentant une dosette (2) qui contient une matière première de boisson, et un dispositif d'infusion (5) qui comprend une chambre d'infusion destinée à recevoir la dosette (2) et à extraire la boisson de la dosette (2) au moyen d'un liquide d'extraction, la dosette (2) présentant une identification et le dispositif d'infusion (5) présentant un détecteur d'identification (50) pour identifier l'identification de la dosette (2),
**caractérisé en ce qu'**une dosette (2) introduite dans le dispositif d'infusion (5) à travers un passage d'introduction (42) est maintenue sur l'élément de fermeture (3) au moyen d'éléments de retenue (34) lorsque l'élément de fermeture (3) se trouve dans la position de chargement (10), le détecteur d'identification (50) étant disposé dans les éléments de retenue (34), l'élément de fermeture (3) présentant les éléments de retenue (34).

2. Système (1) selon la revendication 1, dans lequel le dispositif d'infusion (5) présente un passage d'introduction (42) pour introduire une dosette (2) dans le dispositif d'infusion (5).

3. Système (1) selon l'une quelconque des revendications précédentes, dans lequel la chambre d'infusion présente un élément de réception (4) et un élément de fermeture (3), dans lequel l'élément de fermeture (3) par rapport à l'élément de réception (4) entre une position de chargement (10), dans laquelle l'élément de fermeture (3) et l'élément de réception (4) sont espacés l'un de l'autre, et une position d'extraction (11), dans laquelle l'élément de réception (4) et l'élément de fermeture (3) sont rapprochés l'un de l'autre pour former la chambre d'infusion (1') substantiellement fermée.

4. Système (1) selon l'une quelconque des revendications précédentes, dans lequel le dispositif d'infusion (5) présente une pompe pour introduire un liquide d'extraction sous pression dans la chambre d'infusion, la pompe étant mise en marche au moyen d'un circuit de commande, et le circuit de commande présentant un interrupteur qui permet la mise en marche de la pompe uniquement si le détecteur d'identification (50) détecte une certaine identification sur la dosette (2) .

5. Système (1) selon l'une quelconque des revendications précédentes, dans lequel le détecteur d'identification (50) comprend un dispositif de mesure de résistance pour déterminer une résistance électrique de la dosette (2) ou d'une zone partielle de la dosette (2) .

6. Système (1) selon la revendication 5, dans lequel le dispositif de mesure de résistance comprend un premier point de contact (51) pour contacter la dosette (2) et un deuxième point de contact (52) pour contacter la dosette (2), le dispositif de mesure de résistance étant configuré pour mesurer la résistance électrique entre le premier et le deuxième point de contact (51, 52) .

7. Système selon la revendication 6, dans lequel l'un des deux éléments de retenue (34) comprend le premier point de contact (51) et l'autre des deux éléments de retenue (34) comprend le deuxième point de contact (52) .

8. Procédé de préparation de boisson au moyen d'un système (1) selon l'une quelconque des revendications précédentes, dans lequel dans une première étape, la dosette (2) est introduite dans le dispositif d'infusion (5), dans lequel dans une deuxième étape, l'identification de la dosette (2) est identifiée au moyen du détecteur d'identification (50), et dans lequel dans une troisième étape, la dosette (2) est transférée dans la chambre d'infusion (1') et/ou l'opération d'extraction commence si l'identification de la dosette (2) a été identifiée.

9. Procédé selon la revendication 8, dans lequel, dans la deuxième étape, l'identification détectée est comparée avec des identifications de référence mémorisées.

10. Procédé selon l'une quelconque des revendications 8 ou 9, dans lequel, dans la deuxième étape, une conductivité de la dosette (2) est mesurée au moyen d'un dispositif de mesure de résistance.
